# EUROPÄISCHE PATENTSCHRIFT

(11) **EP 0 841 540 B1**
(45) Veröffentlichungstag und Bekanntmachung des Hinweises auf die Patenterteilung: **22.08.2001**
(21) Anmeldenummer: 97119509.4
(22) Anmeldetag: 07.11.1997
(51) Int. Cl.: G01D 5/347, G01B 5/00

(54) **Längenmesseinrichtung**
Length measuring device
Dispositif de mesure de longueurs

(30) Priorität: 11.11.1996 DE 19646464; 21.03.1997 DE 19711753
(43) Veröffentlichungstag der Anmeldung: 13.05.1998
(73) Patentinhaber: Dr. Johannes Heidenhain GmbH, 83292 Traunreut (DE)
(72) Erfinder: Fiedler, Karl, 83362 Surberg (DE)

(56) Entgegenhaltungen:
- EP-A- 0 323 550
- DE-A- 4 406 799
- US-A- 4 509 262
- US-A- 4 649 648
- US-A- 5 030 825
- US-A- 5 036 597

## Beschreibung

Die Erfindung betrifft eine Längenmeßeinrichtung zur Messung der Relativlage zueinander bewegbarer Objekte gemäß dem Oberbegriff des Patentanspruches 1 sowie ein Verfahren zur Montage einer Längenmeßeinrichtung gemäß dem Oberbegriff des Anspruches 15.

Eine derartige Längenmeßeinrichtung - von der unsere Erfindung ausgeht - ist beispielsweise in der DE 36 25 795 A1 beschrieben. Das den Maßstab tragende Gehäuse wird an den beiden Stirnseiten über Montageblöcke abgedichtet. Jeder der Montageblöcke ist stirnseitig über parallel zur Meßrichtung ausgerichtete Schrauben an dem Gehäuse befestigt. Die Montageblöcke sind über weitere Schrauben an einem Maschinenbett starr befestigt. Das Gehäuse besteht aus einem Material, dessen Ausdehnungskoeffizient sich vom Maschinenbett unterscheidet. Bei Temperarturänderungen führt daher das Gehäuse eine andere Längenänderung aus als das Maschinenbett zwischen den beiden Montageblöcken. Diese unterschiedlichen Längenänderungen verursachen eine erhebliche Zug- bzw. Druckspannung zwischen dem Montageblock und dem Gehäuse, die von den stirnseilig eingesetzten Schrauben aufgenommen werden muß. Die Schrauben müssen daher relativ stark ausgeführt sein, was zur Folge hat, daß am Gehäuse relativ viel Material zur Aufnahme der Bohrung und des Schraubengewindes vorgesehen werden muß. Die Baugröße der Längenmeßeinrichtung ist relativ groß.

Das Dokument US 4 649 648 A zeigt eine Längenmeßeinrichtung mit einem Gehäuse, an dessen stirnseitigen Enden kugelartige Vorsprünge ausgebildet sind. Diese vorsprünge werden in Ausnehmungen von Montageblöcken eingepaßt und hierin mit Schrauben und einer Abdeckplatte gehalten, und die Montageblöcke werden an einem Maschinenteil befestigt.

In der EP 0 418 212 A2 ist eine weitere gattungsgemäße Längenmeßeinrichtung mit stirnseitig angeordneten Montageblöcken beschrieben. Die Sicherung der Montageblöcke erfolgt durch quer zur Meßrichtung in durchgehende Bohrungen eingesetzte Stifte. Nachteilig dabei ist, daß für die Stifte Passungen vorgesehen werden müssen und nach dem Verstiften ein Entfernen der Montageblöcke schwierig ist.

Aus der DE 34 12 879 A1 ist eine weitere Längenmeßeinrichtung bekannt. Zur Abdichtung der stirnseitigen Enden des rohrförmigen Gehäuses ist jeweils ein Deckel vorgesehen, der über eine Halterung mit dem Gehäuse verbunden ist. Die Halterung besteht aus einem Element mit einer in Meßrichtung verlaufenden Gewindebohrung und wird in eine quer zur Meßrichtung vorlaufende Ausfräsung im Gehäuse eingesetzt. Danach wird der Dekkel stirnseitig aufgesetzt und eine Schraube durch eine Bohrung im Deckel stirnseitig eingeführt. Die Schraube greift in die Gewindebohrung des Elementes ein und durch Anziehen der Schraube wird der Deckel an das Gehäuse gezogen. Die Befestigung des Gehäuses am Maschinenbett erfolgt durch unabhängig vom Deckel angeordnete Befestigungselemente, die in Form von Gleitführungen mit dem Gehäuse zusammenwirken. Zwischen den Gleitführungen und dem Gehäuse ist in Meßrichtung betrachtet nur eine kraftschlüssige Verbindung vorgesehen. Diese Verbindung gewährleistet keine reproduzierbaren Messungen, da sich das Gehäuse in der Praxis relativ zu den Gleitführungen verschiebt, insbesondere bei Temperaturänderungen und Schwingungen.

Der Erfindung liegt die Aufgabe zugrunde, eine Längenmeßeinrichtung anzugeben dessen stirnseitige Enden über Montageblöcke abgedichtet sind, die einfach herstellbar ist und mit der eine genaue und reproduzierbare Positionsmessung gewährleistet ist.

Diese Aufgabe wird durch die Längenmeßeinrichtung mit den Merkmalen des Anspruches 1 gelöst.

Weiterhin soll mit der Erfindung ein Verfahren zur Montage einer Längenmeßeinrichtung angegeben werden, das einfach durchführbar ist und das eine genaue und reproduzierbare Positionsmessung der Längenmeßeinrichtung gewährleistet.

Diese Aufgabe wird durch die Merkmale des Anspruches 15 gelöst.

Die Vorteile der Erfindung liegen insbesondere darin, daß eine einfache stirnseitige Bearbeitung des rohrförmigen Gehäuses und eine einfache Montage der Montageblöcke am Gehäuse ermöglicht wird. Weiterhin erlaubt die Ausgestaltung der Längenmeßeinrichtung einen einfachen Wechsel der Abtasteinheit durch schnelles Entfernen der Montageblöcke. Die Montageblöcke können nach dem Entfernen wieder einfach und reproduzierbar am Gehäuse befestigt werden. Die Längenmeßeinrichtung kann an einem zu messenden Objekt, z.B. einem Maschinentisch über die Montageblöcke derart befestigt werden, daß ihr Ausdehnungsverhalten bei Temperaturschwankungen identisch dem Ausdehnungsverhalten des Maschinentisches ist.

Vorteilhafte Ausbildungen der Erfindung sind in den abhängigen Ansprüchen angegeben.

Einzelheiten und weitere Vorteile der Erfindung sind in der nachfolgenden Zeichnungsbeschreibung angeführt.

Es zeigt:
- Figur 1: eine erste Längenmeßeinrichtung;
- Figur 2: einen Schnitt der Längenmeßeinrichtung nach Figur 1;
- Figur 3: eine zweite Längenmeßeinrichtung;
- Figur 4: einen Schnitt der Längenmeßeinrichtung nach Figur 3 während der Montage;
- Figur 5: einen Schnitt der Längenmeßeinrichtung nach Figur 3 im fertig montierten Zustand;
- Figur 6: die zweite Längenmeßeinrichtung mit einem Kontaktelement;
- Figur 7: eine dritte Längenmeßeinrichtung;
- Figur 8: einen Schnitt der Längenmeßeinrichtung nach Figur 7;
- Figur 9: eine vierte Längenmeßeinrichtung;
- Figur 10: einen Schnitt der vierten Längenmeßeinrichtung;
- Figur 11: einen Schnitt einer fünften Längenmeßeinrichtung;
- Figur 12: eine sechste Längenmeßeinrichtung;
- Figur 13: einen Schnitt der Längenmeßeinrichtung nach Figur 12 und
- Figur 14: eine siebte Längenmeßeinrichtung.

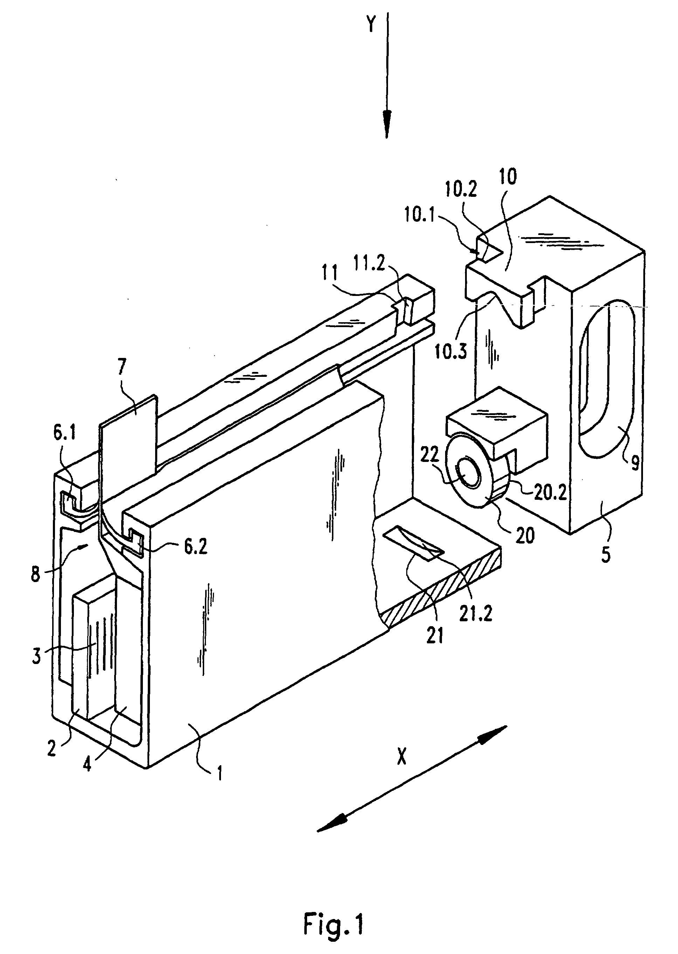

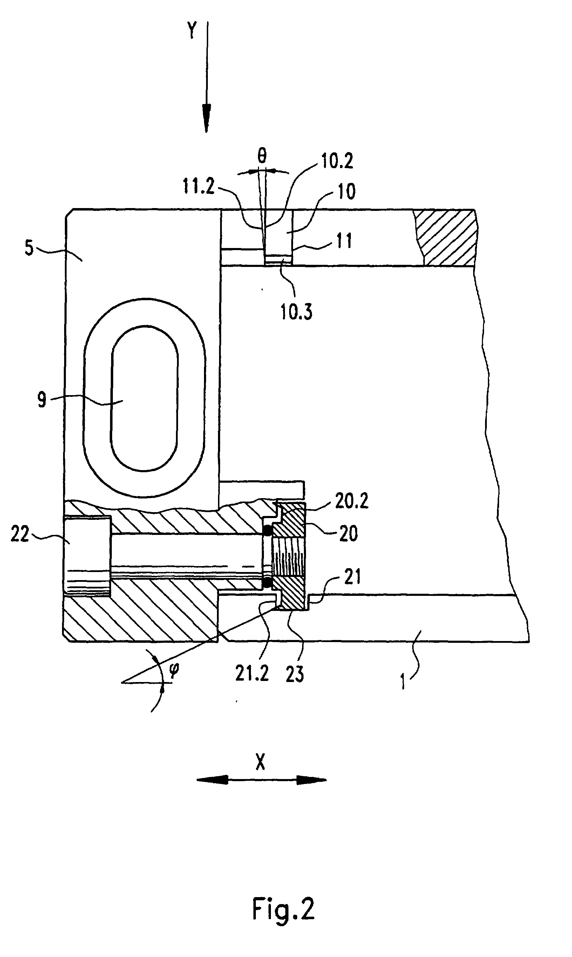

Die Figuren 1 und 2 zeigen ein erstes Beispiel einer erfindungsgemäß ausgebildeten Längenmeßeinrichtung. Sie besteht in bekannter Weise aus einem rohrförmigen, rechteckigen Gehäuse 1 aus Aluminium. In diesem Gehäuse 1 ist ein Maßstab 2, beispielsweise aus Glas oder Glaskeramik, befestigt. Die Codierung 3 des Maßstabes 2 wird im Betrieb von einer Abtasteinheit 4 abgetastet. Zur Positionsmessung wird das Gehäuse 1 über Montageblöcke 5 an einem ersten Objekt und die Abtasteinheit 4 über einen durch Dichtelemente 6 greifenden Mitnehmer 7 an einem zweiten Objekt befestigt. Die Codierung 3 kann eine inkrementale Teilung oder ein absoluter Code sein, die bzw. der lichtelektrisch, induktiv, kapazitiv oder magnetisch abtastbar ausgeführt ist. Der Mitnehmer 7 greift durch einen in Meßrichtung X verlaufenden Schlitz 8 des Gehäuses 1, wobei die Dichtelemente 6 im gezeigten Beispiel dachförmig angeordnete elastisch federnde aneinanderliegende Dichtlippen 6.1 und 6.2 sind.

Die beiden stirnseitigen Öffnungen des Gehäuses 1 werden jeweils mittels eines Montageblockes 5 abgedichtet. Aus Gründen der Übersichtlichkeit ist in den nachfolgend beschriebenen Beispielen nur jeweils einer dieser Montageblöcke 5 dargestellt. Das nicht dargestellte Ende des Gehäuses 1 wird bevorzugt mit einem identischen Montageblock 5 abgedichtet. Ebenso wurde in den nachfolgenden Beispielen der Maßstab 2 und die Abtasteinheit 4 nicht dargestellt.

Der Montageblock 5 weist eine Montageöffnung 9 auf, über die eine Befestigung an einem der beiden Objekte erfolgen kann, deren Relativlage mit der Längenmeßeinrichtung zu messen ist. Die Befestigung erfolgt im einfachsten Fall mit einer stark dimensionierten Schraube, die durch die Montageöffnung 9 des Montageblockes 5 in eine Gewindebohrung des ersten Objektes geführt wird.

An dem Montageblock 5 ist ein Einsatzteil 10 angeformt. Dieses Einsatzteil 10 ist ein zur stirnseitigen Öffnung des Gehäuses 1 weisender Vorsprung mit einer Einschnürung 10.1. Korrespondierend dazu ist das Gehäuse 1 mit einer Aussparung 11 versehen. Die Aussparung 11 verläuft weitgehend senkrecht zur Meßrichtung X und ist eine Art paßgenaue Führung für das Einsatzteil 10. Das Einsatzteil 10 greift formschlüssig in die Aussparung 11 ein, wie im montierten Zustand in Figur 2 dargestellt ist. Die Einschnürung 10.1 des Einsatzteiles 10 bildet quer zur Meßrichtung X verlaufende Flächen 10.2 die mit ebenfalls quer zur Meßrichtung X verlaufenden Flächen 11.2 der Aussparung 11 im montierten Zustand formschlüssig zusammenwirken. Diese Flächen 11.2 der Aussparung 11 sind eine Art Hinterschneidung am Gehäuse 1. Durch das formschlüssige Ineinandergreifen des Einsatzteiles 10 in die Aussparung 11 des Gehäuses 1 wird der Montageblock 5 relativ zum Gehäuse 1 in Meßrichtung X arretiert. Dadurch ist gewährleistet, daß die Montageblöcke 5 bei erfolgter Montage am ersten Objekt das Gehäuse 1 in Meßrichtung X mitnehmen, das heißt daß das Gehäuse 1 bei Temperaturänderungen das gleiche Ausdehnungsverhalten aufweist wie das erste Objekt. Das Gehäuse 1 paßt sich somit an die Längenausdehnung und - schrumpfung des ersten Objektes, z.B. des aus Grauguß bestehenden Maschinentisches an.

Die Montage des Montageblockes 5 an dem Gehäuse 1 erfolgt bei allen erfindungsgemäßen Beispielen in einfacher Weise durch Heranführen des Montageblockes 5 an ein stirnseitiges Ende des Gehäuses 1 und durch einfaches Einhaken des Einsatzteiles 10 in die Aussparung 11 mit einer Relativbewegung des Montageblockes 5 senkrecht zur Meßrichtung X.

Besonders vorteilhaft ist es, wenn die Aussparung 11 außerhalb des durch die Dichtelemente 6 abgedichteten Hohlraumes des Gehäuses 1 im Profil eingebracht ist. Das Einsatzteil 10 besitzt Flächen 10.3, die den Dichtelementen 6 angepaßt sind und im montierten Zustand stehen diese Flächen 10.3 mit den Dichtelementen 6 in Kontakt und bewirken eine Abdichtung in diesem Bereich. Das Einsatzteil 10 kann auch eine Klemmung des Dichtelementes 6 bewirken, indem es durch das Einsatzteil 10 an Flächen des Gehäuses 1 gedrückt wird.

Zumindest eine der beiden Flächen 10.2 und 11.2 verläuft nicht exakt rechtwinkelig zur Meßrichtung X, sondern ist etwas geneigt, wie in Figur 2 ersichtlich ist. Im Beispiel ist die Fläche 10.2 des Gehäuses 1 etwas geneigt, um beim Einhaken eine quer zur Einhakbewegung wirkende Andruckkraft zwischen den stirnseitigen Endflächen des Gehäuses 1 und dem Montageblock 5 zu erreichen. Der Neigungswinkel der Fläche 11.2 relativ zur Normalen der Meßrichtung X ist mit θ eingezeichnet und beträgt etwa 1°. Die Richtung der Einhakbewegung während der Montage des Montageblockes 5 am Gehäuse 1 ist in den Figuren 1 und 2 mit Y eingezeichnet. Während dieser Einhakbewegung stützt sich die Fläche 10.2 an der geneigten Fläche 11.2 ab, wodurch der Montageblock 5 an die Endflächen des Gehäuses 1 in X-Richtung gedrängt wird.

Am Montageblock 5 ist zusätzlich ein weiteres Einsatzteil 20 angebracht. Dieses Einsatzteil 20 ist ebenfalls ein Vorsprung, der in eine Aussparung 21 des Gehäuses 1 eingreift. Ebenso wie das Einsatzteil 10, so sind auch am Einsatzteil 20 Flächen 20.2 und an der Aussparung 21 Flächen 21.2 vorgesehen, die quer zur Meßrichtung X verlaufen und eine in Meßrichtung X wirkende formschlüssige Arretierung zwischen dem Montageblock 5 und dem Gehäuse 1 gewährleisten. Das Einsatzteil 20 ist im gezeigten Beispiel eine Scheibe, die über eine Schraube 22 relativ zum Montageblock 5 in Meßrichtung X bewegt werden kann. Durch Anziehen der Schraube 22 werden die beiden Flächen 20.2 und 21.2 aneinandergedrängt und die stirnseitige Fläche des Montageblockes 5 wird an die gegenüberliegende stirnseitige Fläche des Gehäuses 1 gezogen.

Das Einsatzteil 20 weist eine Ringschneide 23 auf, die sich in die Aussparung 21 des Gehäuses 1 eindrückt und sich am Montageblock 5 abstützt. Die Ringschneide 23 gewährleistet auch eine sichere Arretierung des Montageblockes 5 quer zur Meßrichtung X. Diese Arretierung ist ebenfalls ein Formschluß. Der Winkel ϕ (bezogen auf die Meßrichtung X) der Ringschneide 23 ist so gewählt, daß beim Anziehen der Schraube 22 der Montageblock 5 in die korrekte Lage gedrängt wird, das heißt bezogen auf Figur 2 nach unten in Y-Richtung und somit wegen des Winkels θ zwangsweise auch zum Gehäuse 1. Zusätzlich bewirkt das Eindringen der Ringscheibe 23 in das Gehäuse 1 und in den Montageblock 5 einen elektrischen Kontakt zwischen dem eloxierten Gehäuse 1 und dem eloxierten Montageblock 5.

In den nachfolgenden Figuren werden gleich bzw. ähnlich wirkende Bauteile mit den gleichen Bezugszeichen wie in den Figuren 1 und 2 bezeichnet.

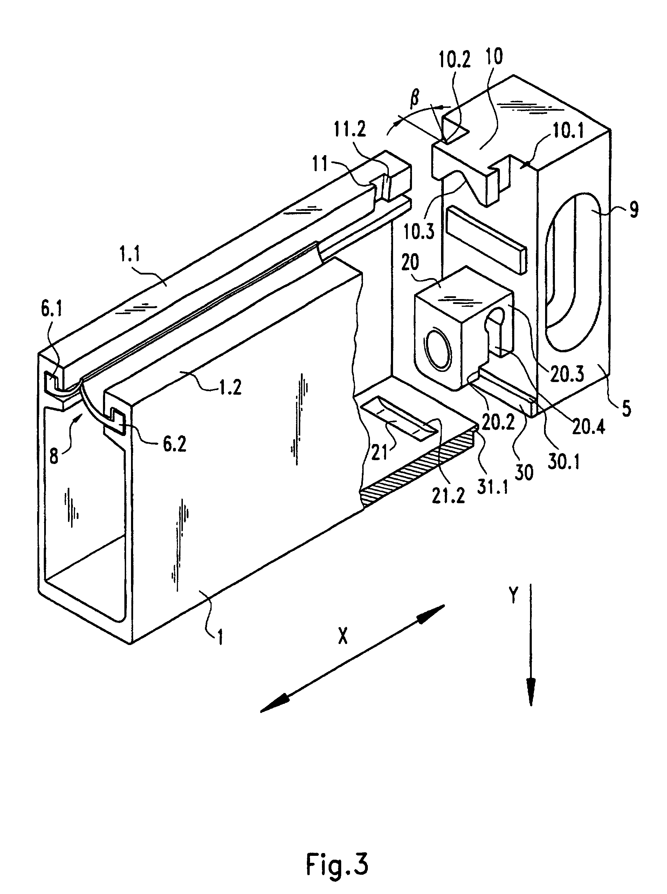

Ein zweites besonders vorteilhaftes Auführungsbeispiel ist in den Figuren 3, 4, und 5 dargestellt. Es ist wiederum eine Aussparung 11 im Gehäuse 1 zur formschlüssigen Aufnahme des Einsatzteiles 10 vorgesehen. Im Unterschied zu dem ersten Ausführungsbeispiel verlaufen die Flächen 10.2 nicht exakt senkrecht zu der Richtung X, sondern etwas geneigt. Der Neigungswinkel ist mit β eingezeichnet. Dies hat den Vorteil, daß zwischen dem Montageblock 5 und den beiden Schenkeln 1.1 und 1.2 des Gehäuses 1 auch eine formschlüssige Verbindung vorliegt, welche die beiden Schenkel 1.1 und 1.2 zusammenhält. Ein Auseinanderspreizen der beiden Schenkel 1.1 und 1.2 wird durch das Zusammenwirken der geneigten Fläche 10.2 mit der Fläche 11.2 verhindert. Die Fläche 11.2 kann den gleichen Neigungswinkel β aufweisen, wodurch ein guter Formschluß gewährleistet ist.

Im Gegensatz zum ersten Ausführungsbeispiel ist das weitere Einsatzteil 20 ebenfalls an den Montageblock 5 einstückig angeformt. Das Einsatzteil 20 ist über ein Gelenk 20.3 relativ zum Montageblock 5 in Meßrichtung X verschiebbar. Das Gelenk 20.3 ist durch ein Schwachstellengelenk gebildet, indem zwischen dem Montageblock 5 und dem Einsatzteil 20 ein Schlitz 20.4 eingebracht wurde. Bei der Montage greift das Einsatzteil 20 in die Aussparung 21 des Gehäuses 1 und die beiden Flächen 21.2 und 20.2 werden durch Betätigen der Schraube 22 aneinandergedrängt. Die beiden Flächen 21.2 und 20.2 bilden einen in Meßrichtung X wirkenden Formschluß.

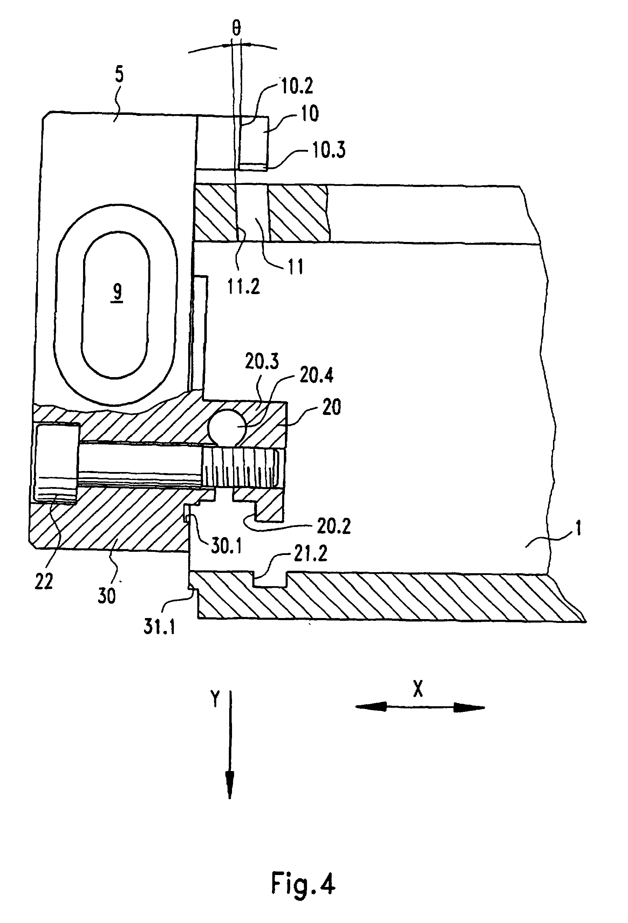

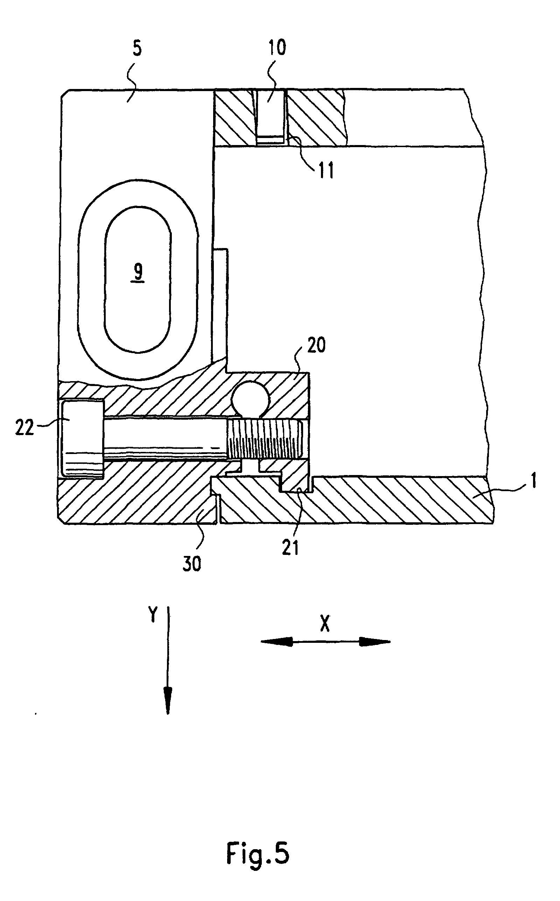

Eine weitere besondere Ausgestaltung der zweiten Ausführung besteht darin, daß am Montageblock 5 ein Vorsprung 30 angebracht - insbesondere angeformt - ist, der eine Fläche 30.1 aufweist, die quer zu der Richtung Y verläuft. Diese Fläche 30.1 wirkt mit einer Fläche 31.1 des Gehäuses 1 zusammen. Diese Fläche 31.1 verläuft ebenfalls quer zu der Richtung Y. Diese Flächen 30.1 und 31.1 bilden im montierten Zustand einen Formschluß, der entgegen der Y-Richtung wirkt. Die Y-Richtung ist dabei die Richtung, in welcher der Montageblock 5 bei der Montage relativ zum Gehäuse 1 bewegt wird, um ein einfaches Einhaken der Einsatzteile 10, 20 in die Aussparungen 11, 21 zu ermöglichen. Eine Stellung während dieses Einhak-Vorganges ist in Figur 4 dargestellt. Figur 5 zeigt den fertig montierten Montageblock 5.

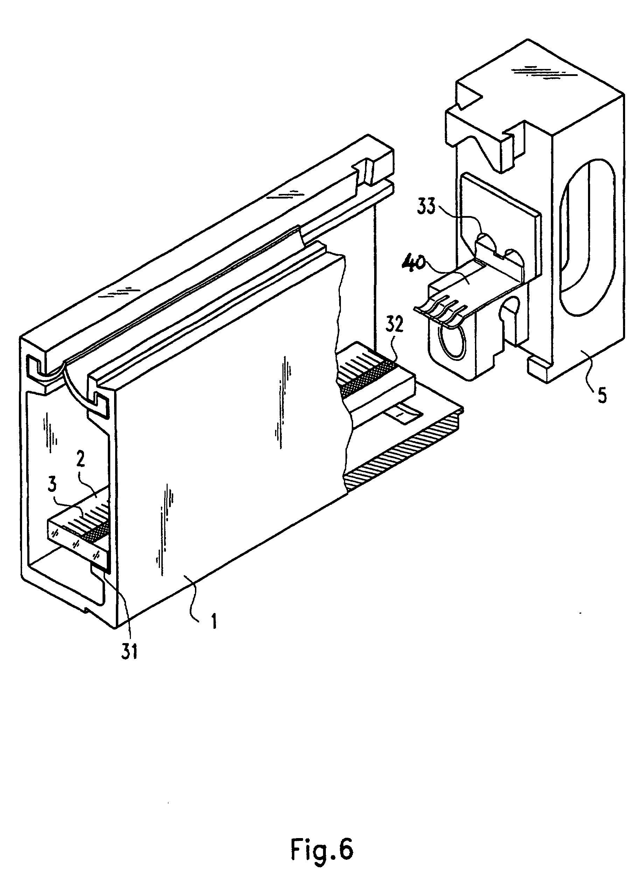

Figur 6 zeigt eine Ergänzung der zweiten Ausführungsform. Das Gehäuse 1 sowie der Montageblock 5 wurden oben bereits beschrieben. Zusätzlich ist am Montageblock 5 ein Kontaktelement 40 angebracht, das eine elektrisch leitende Verbindung zwischen dem Maßstab 2 und dem Montageblock 5 gewährleistet.

Der Maßstab 2 ist in der Regel an einer Fläche des Gehäuses 1 mittels einer elastischen Klebstoffschicht 31 befestigt. Diese Klebstoffschicht 31 ist elektrisch isolierend. Der Maßstab 2 besteht aus Glas oder Glaskeramik und ist somit elektrisch isoliert. Auf der Oberfläche des Maßstabes 2 ist die Codierung 3 aus Chrom aufgebracht. Die Abtasteinheit 4 (Figur 1) stützt sich in der Regel über Kugellager oder Gleitschuhe auf der Oberfläche des Maßstabes 2 federnd ab.

Durch äußere elektrische Felder sowie durch das Abrollen und Gleiten der Kugellager kann sich die Oberfläche des Maßstabes 2 elektrisch aufladen, wodurch ein Potentialunterschied dieser Oberfläche und anderen elektrisch leitenden Teilen der Längenmeßeinrichtung entsteht, der zu einer impulsartigen Entladung führen kann. Diese Entladungen werden den elektrischen Abtastsignalen überlagert, was bei inkrementalen Meßsystemen zu Zählimpulsen und somit zu Zählfehlern oder zu anderen, die Auswerteeinheit störenden Signalen führt.

Um diese elektrischen Aufladungen von der Oberfläche des Maßstabes 2 über die gesamte Länge des Maßstabes 2 abzuführen, ist eine Schicht 32 aus Chrom auf der Maßstab-Oberfläche aufgebracht, welche die Markierungen der Codierung 3 elektrisch miteinander verbindet. Diese elektrisch leitende Schicht 32 ist zumindest an einem Maßstabende über das Kontaktelement 30 mit dem Montageblock 5 elektrisch leitend verbunden. Dieses Kontaktelement 30 stellt die elektrische Verbindung der Schicht 32 mit einem Bezugspotential her, da der elektrisch leitende Montageblock 5 an einem Maschinenteil elektrisch leitend befestigt ist und dieses Maschinenteil wiederum an das Bezugspotential (Erde, Masse) angeschlossen ist. Um eine gute elektrisch leitende Verbindung zwischen dem Maßstab 2 und dem Montageblock 5 aus Aluminium herzustellen, ist es erforderlich das Kontaktelement 30 an einem nicht eloxierten Bereich mit dem Montageblock 5 in Kontakt zu bringen. Hierzu ist beispielsweise im Montageblock 5 eine Bohrung 33 eingebracht, in welche das Kontaktelement 30 eingepreßt ist. Durch das Einpressen entsteht eine mechanische Verbindung sowie gleichzeitig eine elektrisch leitende Verbindung, da die isolierende Eloxalschicht in der Bohrung aufgeritzt wird. Das Kontaktelement 30 kann auch durch Schrauben oder Nieten am Montageblock 5 befestigt werden.

Das Kontaktelement 40 ist ein einfaches Blechteil aus elektrisch leitendem Material, das sich im montierten Zustand des Montageblockes 5 auf der Oberfläche der Schicht 32 federnd abstützt.

Die Verwendung des Kontaktelementes 40 ist besonders vorteilhaft bei elektrisch nicht leitenden Maßstäben 2 einsetzbar. Besteht der Maßstab aus elektrisch leitendem Material und ist dieser elektrisch Isolierend im Gehäuse 1 befestigt, so ist auch hier das Kontaktelement 40 vorteilhaft einsetzbar, indem es den Maßstab mit dem Montageblock 5 elektrisch leitend verbindet.

Die besonders vorteilhaften Ausgestaltungen dieser zweiten Ausführung können auch bei den übrigen, in der Anmeldung beschriebenen Varianten Anwendung finden.

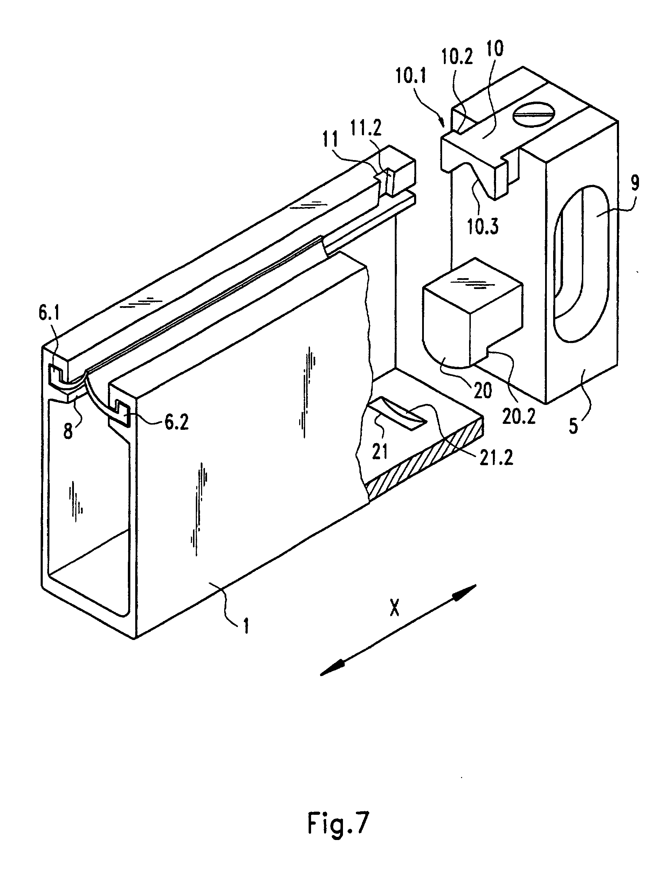

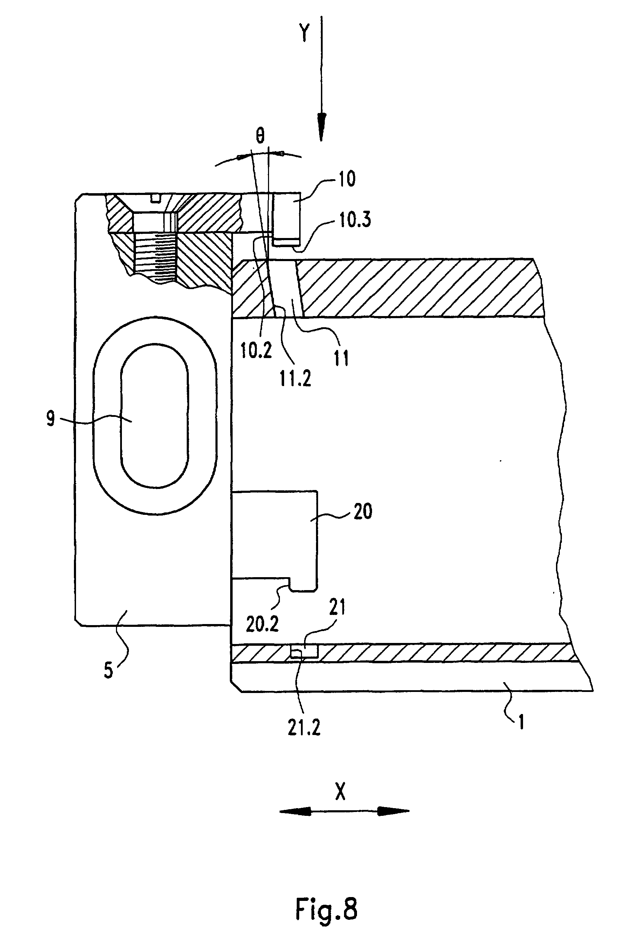

Das dritte Ausführungsbeispiel gemäß den Figuren 7 und 8 zeigt eine Längenmeßeinrichtung mit einem Montageblock 5, an dem das Einsatzteil 10 an dem Montageblock 5 angeschraubt ist. Das Einsatzteil 20 ist am Montageblock 5 einstückig angeformt und weist den Vorsprung, der in die Aussparung 21 eingreift einstückig an den Montageblock 5 angeformt auf. Die Form des Einsatzteiles 10 und der Aussparung 11 entspricht dem ersten Beispiel.

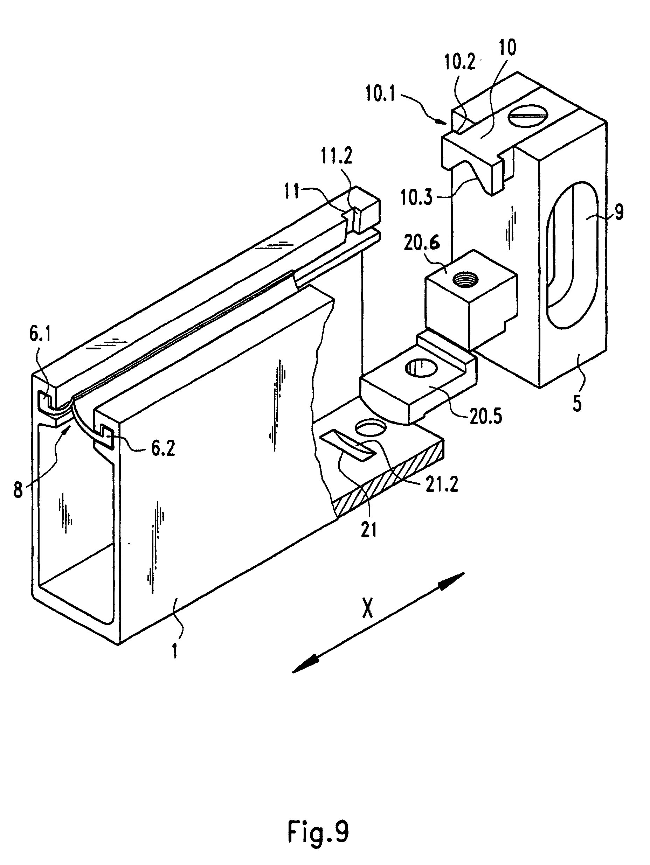

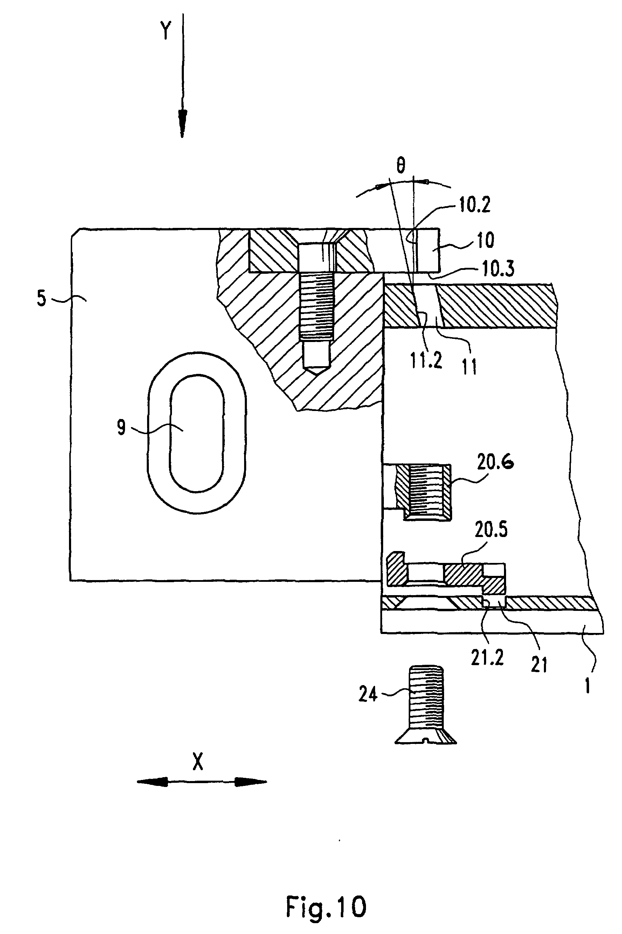

Beim vierten Ausführungsbeispiel gemäß den Figuren 9 und 10 ist das Einsatzteil 10 am Montageblock 5 angeschraubt und ansonsten wie im ersten Beispiel ausgeführt. Das Einsatzteil 20 ist mehrteilig ausgeführt. Ein erstes Teil 20.6 ist am Montageblock 5 angeformt. Dieses Teil 20.4 greift in Meßrichtung X betrachtet formschlüssig in ein Zwischenteil 20.5 ein und dieses Zwischenteil 20.5 wieder formschlüssig in die Aussparung 21. Mit der Schraube 24 wird das Zwischenteil 20.5 am Gehäuse 1 fixiert. Auch bei dieser Ausführungsform wirken quer zur Meßrichtung X verlaufende Flächen zusammen, um einen Formschluß zwischen dem Montageblock 5 und dem Gehäuse 1 zu erreichen, der den Montageblock 5 mit dem Gehäuse 1 in Meßrichtung X zueinander arretiert und fixiert.

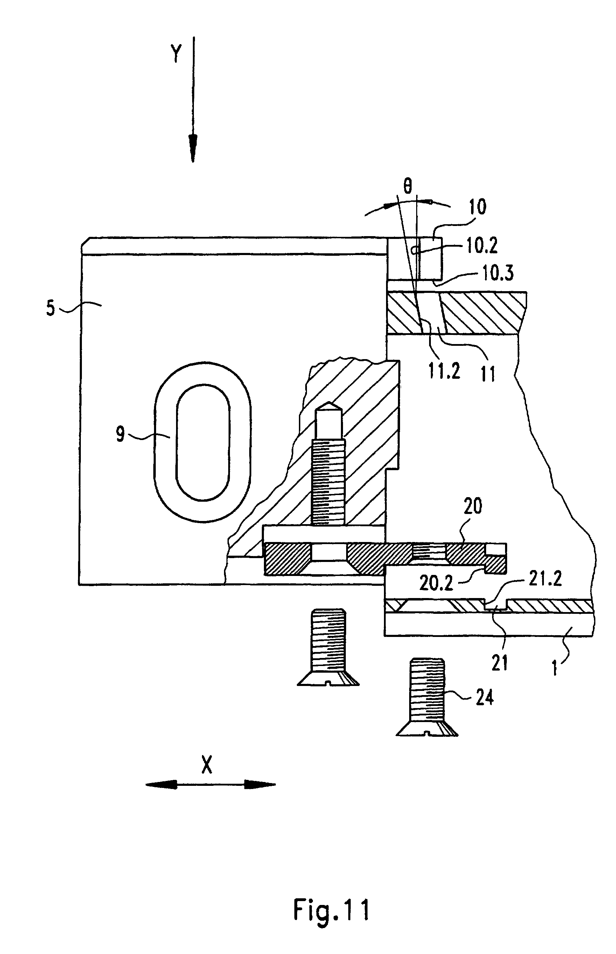

Beim fünften Ausführungsbeispiel gemäß der Figur 11 ist das Einsatzteil 10 einstückig am Montageblock 5 angeformt und wirkt mit der Aussparung 11 im Gehäuse 1 entsprechend den oben beschriebenen Beispielen zusammen. Das weitere Einsatzteil 20 ist am Montageblock 5 angeschraubt und besitzt einen Vorsprung mit einer Fläche 20.2 quer zur Meßrichtung X, die mit einer korrespondierenden Fläche 21.2 des Gehäuses 1 zusammenwirkt, um den Montageblock 5 am Gehäuse 1 formschlüssig zu arretieren. Zur Sicherung kann zusätzlich eine Schraube 24 vorgesehen sein, die quer zur Meßrichtung X durch das Gehäuse 1 und das Einsatzteil 20 geschraubt ist.

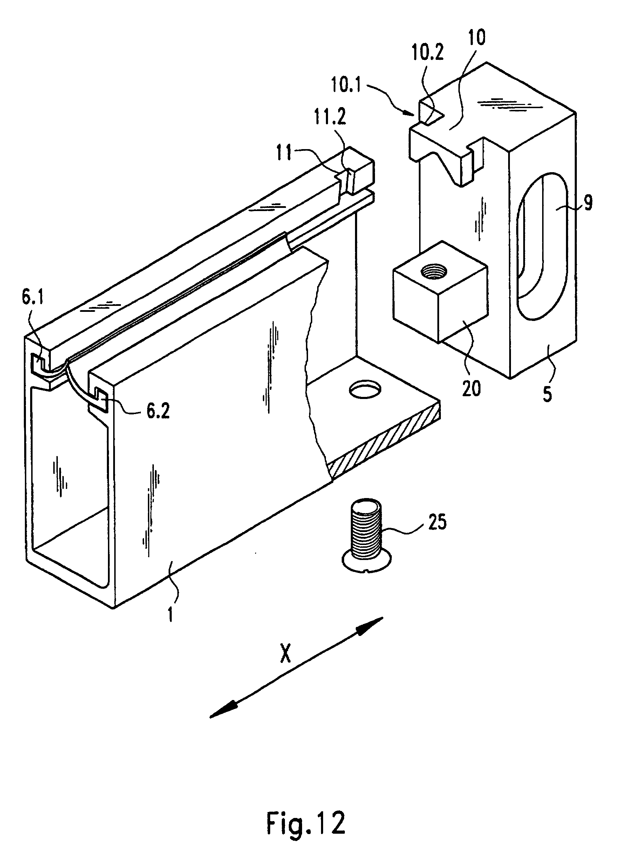

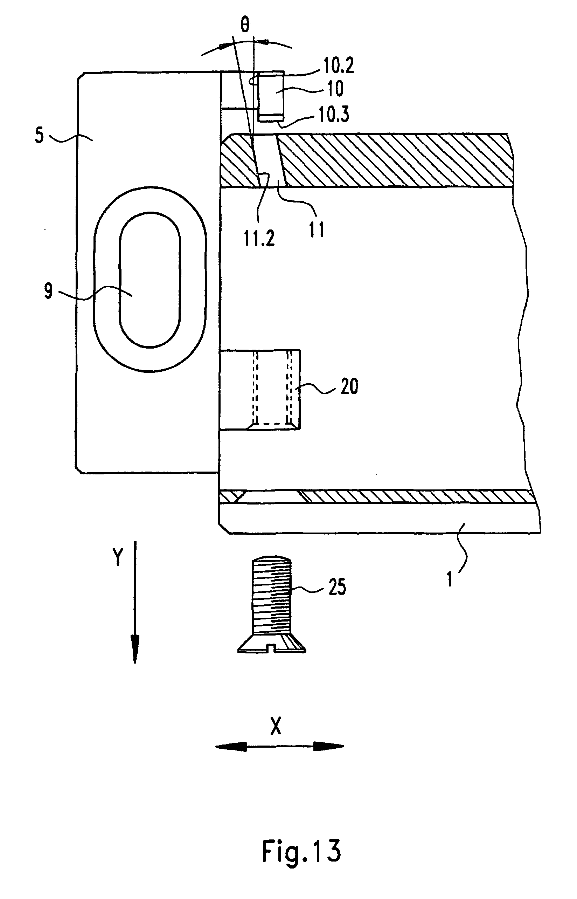

Beim sechsten Ausführungsbeispiel gemäß den Figuren 12 und 13 ist das Einsatzteil 10 und die Aussparung 11 wie bereits erläutert ausgeführt. Zusätzlich ist eine Sicherung vorgesehen, die aus dem Einsatzteil 20 besteht. Das Einsatzteil 20 ist als Vorsprung an dem Montageblock 5 angeformt und besitzt eine quer zur Meßrichtung X verlaufende Bohrung. Im Gehäuse 1 ist eine korrespondierende Bohrung vorgesehen, durch die das Einsatzteil 20 über die Schraube 25 mit dem Montageblock 5 quer zur Meßrichtung X verschraubt wird.

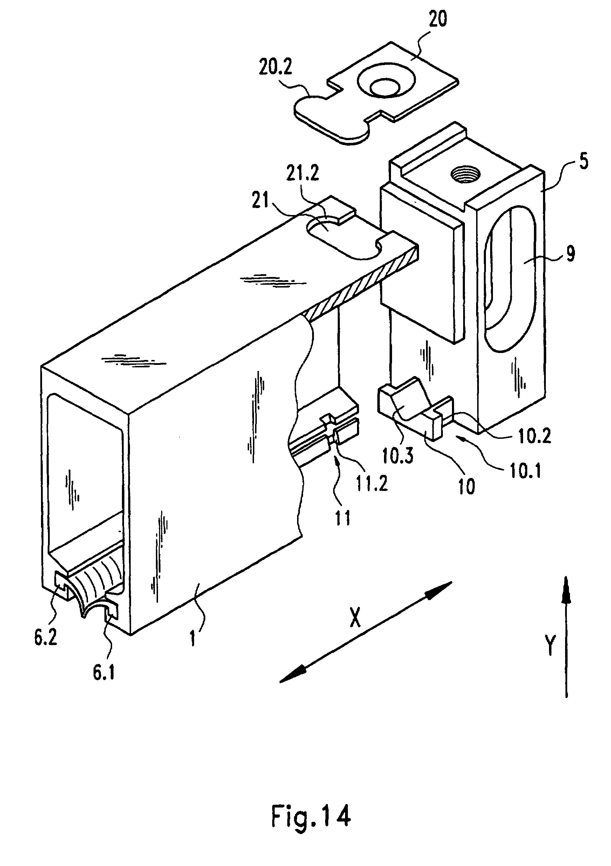

Beim siebten Ausführungsbeispiel gemäß Figur 14 erfolgt die Sicherung mit dem Einsatzteil 20, das am Montageblock 5 angeschraubt wird und formschlüssig in eine Aussparung 21 des Gehäuses 1 eingreift. Die Fixierung quer zur Meßrichtung X erfolgt durch die Flächen 20.2 und 21.2. Das Einsatzteil 10 und die Aussparung 11 ist entsprechend den anderen Ausführungsbeispielen gestaltet.

Bei allen Ausführungsbeispielen mit quer zur Meßrichtung X verlaufenden Schraubverbindungen wäre es vorteilhaft, auch diese durch eine formschlüssige Verbindung zu ersetzen, indem quer zur Meßrichtung X verlaufende Flächen der zu verbindenden Teile wie Montageblock 5, Einsatzteil 10 bzw. 20, Gehäuse 1 und Zwischenteile 20.6 bzw. 20.5 zusammenwirken.

Bei allen Beispielen kann zur sicheren Abdichtung zwischen dem stirnseitigen Ende des Gehäuses 1 und dem Montageblock 5 ein Dichtmaterial, beispielsweise eine Dichtscheibe oder ein Dichtring eingebracht sein.

Bei allen Ausführungsbeispielen ist es vorteilhaft, wenn am Gehäuse 1 nur Aussparungen 11, 21, vorzusehen sind. Somit kann als Gehäuse 1 ein kostengünstiges Profil verwendet werden, das entsprechend der geforderten Meßlänge einfach abgelängt wird und nachfolgend in einfacher Weise die Aussparungen 11, 21 eingebracht werden. Durch diese Maßnahme ist auch gewährleistet, daß die Abtasteinheit 4 stirnseitig leicht eingeführt werden kann. Ebenso ist ein leichter Wechsel der Abtasteinheit 4 möglich.

In nicht gezeigter Weise kann anstelle der Montageöffnung 9 am Montageblock 5 eine andere Montagemöglichkeit vorgesehen sein. Beispielsweise wieder ein Formschluß, wie in der DE 35 30 776 C2 beschrieben. Bei längeren Gehäusen 1 kann es angebracht sein, weitere Befestigungsstellen vorzusehen. Diese Befestigungsstellen sollten formschlüssig ausgeführt sein, um zu gewährleisten, daß das Gehäuse 1 bei Temperaturänderungen der Ausdehnung des ersten Objektes (Maschinentisch) folgt. Diese formschlüssige Verbindung entlang der Längserstreckung des Gehäuses 1 wirkt parallel, also in Meßrichtung X. Jede Befestigungsstelle kann aus einer sphärisch gekrümmten Oberfläche bestehen, die in eine Kegelpfanne eingreift.

## Patentansprüche

1. Längenmeßeinrichtung mit einem in Meßrichtung (X) verlaufend innerhalb eines rohrförmigen Gehäuses (1) angeordneten Maßstab (2) und einer innerhalb des Gehäuses längsverschiebbaren Abtasteinheit (4) zur Abtastung des Maßstabes (2), wobei jedes der stirnseitigen Enden des Gehäuses (1) durch einen Montageblock (5) abgeschlossen ist, mit dem das Gehäuse (1) an einem zu messenden Objekt befestigbar ist, dadurch gekennzeichnet, daß an dem Montageblock (5) zumindest ein Einsatzteil (10, 20) befestigt oder angeformt ist, das in eine Aussparung (11, 21) des Gehäuses (1) eingreift und durch diesen Eingriff der Montageblock (5) gegenüber dem Gehäuse (1) in Meßrichtung (X) formschlüssig arretiert ist.

2. Längenmeßeinrichtung nach Anspruch 1, dadurch gekennzeichnet, daß das Einsatzteil (10) einen Vorsprung mit einer Aussparung (10.1) aufweist, durch die quer zur Meßrichtung (X) verlaufende Flächen (10.2) gebildet werden, die mit ebenfalls quer zur Meßrichtung (X) verlaufenden Flächen (11.2) der Aussparung (11) des Gehäuses (1) formschlüssig zusammenwirken.

3. Längenmeßeinrichtung nach einem der Ansprüche 1 oder 2, dadurch gekennzeichnet, daß die Aussparung (11) im Gehäuse (1) quer zur Meßrichtung (X) verläuft und eine quer zur Meßrichtung (X) verlaufende Führung des Einsatzteiles (10) bei der Montage bildet.

4. Längenmeßeinrichtung nach Anspruch 3, dadurch gekennzeichnet, daß das Gehäuse (1) einen in Meßrichtung (X) verlaufenden Schlitz (8) aufweist, der über ein Dichtelement abgedichtet ist, und daß die Aussparung (11) außerhalb des abgedichteten Hohlraumes des Gehäuses (1) angeordnet ist.

5. Längenmeßeinrichtung nach einem der Ansprüche 1 bis 4, dadurch gekennzeichnet, daß das Gehäuse (1) einen in Meßrichtung (X) verlaufenden Schlitz (8) aufweist und beidseitig des Schlitzes (8) ein Schenkel (1.1, 1.2) des Gehäuses (1) verläuft, daß weiterhin in jedem dieser Schenkel (1.2, 1.2) eine quer zur Meßrichtung (X) verlaufende Aussparung (11) eingebracht ist, in die jeweils ein Einsatzteil (10) oder ein Bereich eines gemeinsamen Einsatzteiles (10) formschlüssig eingreift, wobei der Formschluß in Meßrichtung (X) sowie in zumindest eine quer dazu verlaufende Richtung wirkt.

6. Längenmeßeinrichtung nach einem der Ansprüche 2 bis 4, dadurch gekennzeichnet, daß zumindest eine der beiden Flächen (10.2, 11.2) mit einem kleinen Winkel (θ) von etwa 1° zur Normalen der Meßrichtung (X) derart geneigt ist, daß beim Einhaken des Einsatzteiles (10) durch das Zusammenwirken der beiden Flächen (10.2, 11.2) der Montageblock (5) an die stirnseitig abzudichtende Fläche des Gehäuses (1) gedrängt wird.

7. Längenmeßeinrichtung nach Anspruch 4, dadurch gekennzeichnet, daß das Einsatzteil (10) eine Fläche (10.3) aufweist, die quer zur Meßrichtung (X) verläuft und mit dem Dichtelement (6) in Kontakt steht.

8. Längenmeßeinrichtung nach Anspruch 1, dadurch gekennzeichnet, daß mehrere Einsatzteile (10, 20) am Montageblock (5) vorgesehen sind, die in Aussparungen (11, 21) des Gehäuses (1) formschlüssig eingreifen.

9. Längenmeßeinrichtung nach Anspruch 8, dadurch gekennzeichnet, daß eines der Einsatzteile (20) am Montageblock (5) in Meßrichtung (X) verschiebbar oder verschwenkbar gelagert ist und durch Verschiebung des Einsatzteiles (20) eine in Meßrichtung (X) wirkende Verspannung zwischen dem Montageblock (5) und dem Gehäuse (1) erzielt wird.

10. Längenmeßeinrichtung nach Anspruch 9, dadurch gekennzeichnet, daß das Einsatzteil (20) einen Vorsprung (23) aufweist, der in die Aussparung (21) des Gehäuses (1) eingreift und einen quer zur Meßrichtung (X) wirkenden Formschluß bildet.

11. Längenmeßeinrichtung nach Anspruch 10, dadurch gekennzeichnet, daß der Vorsprung eine Ringschneide (23) ist.

12. Längenmeßeinrichtung nach einem der vorhergehenden Ansprüche, dadurch gekennzeichnet, daß am Montageblock (5) eine Fläche (30.1) angeordnet ist, die mit einer Fläche (31.1) des Gehäuses (1) zusammenwirkt und einen quer zur Meßrichtung (X) wirkenden Formschluß bildet.

13. Längenmeßeinrichtung nach einem der vorhergehenden Ansprüche, dadurch gekennzeichnet, daß am Montageblock (5) ein elektrisch leitendes Kontaktelement (40) angebracht ist, das einen elektrischen Kontakt zwischen dem Maßstab (2) und dem Montageblock (5) herstellt.

14. Längenmeßeinrichtung nach Anspruch 13, dadurch gekennzeichnet, daß das Kontaktelement (40) ein federndes Teil ist, das federnd an einer elektrisch leitenden Oberfläche des Maßstabes (2) aufliegt.

15. Verfahren zur Montage einer Längenmeßeinrichtung, die ein rohrförmiges Gehäuse (1) mit einem Maßstab (2) aufweist, dadurch gekennzeichnet, daß ein Montageblock (5) nach folgendem Verfahrensschritt an einer stirnseitigen Öffnung des Gehäuses (1) montiert wird: Einhaken eines am Montageblock (5) angebrachten Einsatzteiles (10, 20) in eine quer zur Meßrichtung (X) verlaufende Aussparung (11, 21) und Bewegung des Montageblockes (5) quer zur Meßrichtung (X).

16. Verfahren nach Anspruch 15, dadurch gekennzeichnet, daß während der Bewegung des Montageblockes (5) quer zur Meßrichtung (X) ein am Montageblock (5) angebrachtes Kontaktelement (30) mit einer Oberfläche des Maßstabes (2) in elektrisch leitenden Kontakt gebracht wird.

## Claims

1. Length measuring device with a measurement scale (2) arranged running in the measuring direction (X) inside a tubular housing (1) and with a scanning unit (4) which can be longitudinally displaced inside the housing for scanning the scale (2), each of the end faces of the housing (1) being closed off by a mounting block (5) by means of which the housing (1) can be fastened on an object to be measured, **characterised in that** at least one inserting element (10, 20) is fastened or formed on the mounting block (5) and engages in a cutout (11, 21) of the housing (1) and through this engagement the mounting block (5) is fixed in place in an interlocking manner in relation to the housing (1) in the measuring direction (X).

2. Length measuring device according to claim 1, **characterised in that** the inserting element (10) has a protrusion with a cutout (10.1) by means of which surfaces are formed which extend transversely with respect to the measuring direction (X) and which co-operate in an interlocking manner with surfaces (11.2) of the cutout (11) of the housing (1) which also extend transversely with respect to the measuring direction (X).

3. Length measuring device according to one of claims 1 or 2, **characterised in that** the cutout (11) in the housing (1) runs transversely with respect to the measuring direction (X) and in the course of mounting forms a guide for the inserting element (10) extending transversely with respect to the measuring direction (X).

4. Length measuring device according to claim 3, **characterised in that** the housing (1) has a slit (8) extending in the measuring direction (X) and which is sealed by means of a sealing element, and in that the cutout (11) is arranged outside of the sealed hollow chamber of the housing (1).

5. Length measuring device according to one of claims 1 to 4, **characterised in that** the housing (1) has a slit (8) extending in the measuring direction (X) and a leg (1.1, 1.2) of the housing (1) runs on both sides of the slit (8), in that furthermore a cutout (11) extending transversely with respect to the measuring direction (X) has been made in each of these legs (1.2, 1.2), in which respectively an inserting element (10) or a region of a common inserting element (10) engages in an interlocking manner, the interlocked connection acting in the measuring direction (X) as well as in at least one direction extending transversely to it.

6. Length measuring device according to one of claims 2 to 4, **characterised in that** at least one of the two surfaces (10.2, 11.2) is inclined at a slight angle (θ) of roughly 1° with respect to the normal direction of the measuring direction (X) in such a way that, when the inserting element (10) is hooked in, the mounting block (5) is forced by the cooperation of the two surfaces (10.2, 11.2) against the surface to be sealed at the front of the housing (1).

7. Length measuring device according to claim 4, **characterised in that** the inserting element (10) has a surface (10.3) which extends transversely with respect to the measuring direction (X) and is in contact with the sealing element (6).

8. Length measuring device according to claim 1, **characterised in that** a plurality of inserting elements (10, 20) are provided on the mounting block (5) which engage in an interlocking manner in cutouts (11, 21) of the housing (1).

9. Length measuring device according to claim 8, **characterised in that** one of the inserting elements (20) is seated, pivotable or displaceable in the measuring direction (X), on the mounting block (5) and by displacement of the inserting element (20) bracing, acting in the measuring direction (X), is achieved between the mounting block (5) and the housing (1).

10. Length measuring device according to claim 9, **characterised in that** the inserting element (20) has a protrusion (23) which engages in the cutout (21) of the housing (1) and forms an interlocked connection acting transversely with respect to the measuring direction (X).

11. Length measuring device according to claim 10, **characterised in that** the protrusion is a cupped gripping point (23).

12. Length measuring device according to one of the preceding claims, **characterised in that** there is arranged on the mounting block (5) a surface (30.1) which cooperates with a surface (31.1) of the housing (1) and forms an interlocked connection acting transversely with respect to the measuring direction (X).

13. Length measuring device according to one of the preceding claims, **characterised in that** there is attached to the mounting block (5) an electrically conductive contact element (40) which makes an electrical contact between the scale (2) and the mounting block (5).

14. Length measuring device according to claim 13, **characterised in that** the contact element (40) is a resilient element which rests resiliently on an electrically conductive surface of the scale (2).

15. Method for mounting a length measuring device which has a tubular housing (1) with a measurement scale (2), **characterised in that** a mounting block (5) is mounted on an opening in the front end of the housing (1) according to the following method step:
hooking of an inserting element (10, 20) attached to the mounting block (5) into a cutout (11, 21) extending transversely with respect to the measuring direction (X), and movement of the mounting block (5) transversely with respect to the measuring direction (X).

16. Method according to claim 15, **characterised in that** in the course of the movement of the mounting block (5) transversely with respect to the measuring direction (X), a contact element (30) attached to the mounting block (5) is brought into electrically conducting contact with a surface of the scale (2).

## Revendications

1. Dispositif de mesure de longueurs comprenant une règle graduée (2) qui est disposée à l'intérieur d'un boîtier (1) tubulaire et s'étend dans la direction de mesure (X), ainsi qu'une unité de palpage (4) qui peut se déplacer dans la direction longitudinale à l'intérieur du boîtier, aux fins de palper la règle (2), chacune des extrémités frontales du boîtier (1) étant obturée par un bloc de fixation (5), par l'intermédiaire duquel ledit boîtier (1) peut être fixé à l'objet à mesurer, caractérisé en ce qu'au moins une pièce intermédiaire (10, 20) est fixée à ou est aménagée sur le bloc de fixation (5), laquelle pièce intermédiaire s'engage dans une échancrure (11, 21) du boîtier (1) et que le bloc de fixation (5) est immobilisé par obstacle vis-à-vis du boîtier (1) dans la direction de mesure (X).

2. Dispositif de mesure de longueur selon la revendication 1, caractérisé en ce que la pièce intermédiaire (10) comporte une saillie avec une échancrure (10.1) qui définit des surfaces (10.2) orientées transversalement à la direction de mesure (X), qui coopèrent avec des surfaces (11.2) de l'échancrure (11) dans le boîtier (1) également disposées transversalement à la direction de mesure (X).

3. Dispositif de mesure de longueur selon la revendication 1 ou 2, caractérisé en ce que l'échancrure (11) dans le boîtier (1) s'étend transversalement à la direction de mesure (X) et forme, au montage, un guidage pour la pièce intermédiaire (10) transversalement à la direction de mesure (X).

4. Dispositif de mesure de longueur selon la revendication 3,
caractérisé en ce que le boîtier (1) comporte une fente (8) qui s'étend dans la direction de mesure (X) et est fermée par un élément d'étanchéité et en ce que l'échancrure (11) est disposée à l'extérieur de la cavité du boîtier (1) fermée de manière étanche.

5. Dispositif de mesure de longueur selon une des revendications 1 à 4, caractérisé en ce que le boîtier (1) comporte une fente (8) qui s'étend dans la direction de mesure (X), en ce qu'une aile (1.1, 1.2) du boîtier (1) s'étend de chaque côté de la fente (8), en ce qu'une échancrure (11) qui s'étend transversalement à la direction de mesure (X) et dans laquelle une pièce intermédiaire (10) ou une partie de pièce intermédiaire (10) commune s'engage avec complémentarité de formes, est aménagée dans chacune des ailes, la liaison par obstacle agissant dans la direction de mesure (X) et dans au moins une direction transversale à celle-ci.

6. Dispositif de mesure de longueur selon une des revendications 2 à 4, caractérisé en ce qu'au moins une des surfaces (10.2, 11.2) est inclinée d'un petit angle, d'environ 1°, par rapport à la normale à la direction de mesure (X), de telle sorte que lors de l'accrochage de la pièce intermédiaire (10), le bloc de fixation (5) soit pressé par l'action conjuguée des deux surfaces (10.2, 11.2) contre la surface frontale du boîtier (1) devant être fermée de manière étanche.

7. Dispositif de mesure de longueur selon la revendication 4, caractérisé en ce que la pièce intermédiaire (10) comporte une surface (10.3) qui s'étend transversalement à la direction de mesure (X) est en contact avec l'élément d'étanchéité (6).

8. Dispositif de mesure de longueur selon la revendication 1, caractérisé en ce qu'il est prévu plusieurs pièces intermédiaires (10, 20) sur le bloc de fixation (5) qui pénètrent avec complémentarité de forme dans des échancrures (11, 21) du boîtier (1).

9. Dispositif de mesure de longueur selon la revendication 8, caractérisé en ce que l'une des pièces intermédiaires (10, 20) est montée avec possibilité de coulissement ou de pivotement dans la direction de mesure (X) et qu'une précontrainte agissant dans la direction de mesure (X) entre le bloc de fixation (5) et le boîtier (1) peut être obtenue par translation de la pièce intermédiaire (20).

10. Dispositif de mesure de longueur selon la revendication 9, caractérisé en ce que la pièce intermédiaire (20) présente une saillie (23) qui s'engage dans l'échancrure (21) du boîtier (1) et forme une liaison par obstacle agissant transversalement à la direction de mesure (X).

11. Dispositif de mesure de longueur selon la revendication 10, caractérisé en ce que la saillie est une arête (23) annulaire.

12. Dispositif de mesure de longueur selon une des revendications précédentes, caractérisé en ce qu'il est prévu sur le bloc de fixation (5) une surface (30.1) qui coopère avec une surface (31.1) du boîtier (1) et forme une liaison par obstacle agissant dans la direction de mesure (X).

13. Dispositif de mesure de longueur selon une des revendications précédentes, caractérisé en ce qu'un élément de contact (40) électro-conducteur est monté sur le bloc de fixation (5), lequel élément de contact établit un contact électrique entre la règle (2) et le bloc de fixation (5).

14. Dispositif de mesure de longueur selon la revendication 13, caractérisé en ce que l'élément de contact (40) est un élément élastique sur le bloc de fixation (5), lequel élément est en contact élastique avec une surface électro-conductrice de la règle (2).

15. Procédé de montage d'un dispositif de mesure de longueurs comprenant une règle graduée (2) qui est disposée à l'intérieur d'un boîtier (1) tubulaire et s'étend dans la direction de mesure (X), ainsi qu'une unité de palpage (4) qui peut se déplacer dans la direction longitudinale à l'intérieur du boîtier aux fins de palper la règle (2), chacune des extrémités frontales du boîtier (1) étant obturée par un bloc de fixation (5) par l'intermédiaire duquel le boîtier (1) peut être fixé à l'objet à mesurer, caractérisé en ce qu'on monte un bloc de fixation (5) sur une ouverture frontale du boîtier (1), conformément aux étapes de procédé suivantes
accrochage d'une pièce intermédiaire (10, 20) montée sur le bloc de fixation (5) dans une cavité (11, 21) qui s'étend transversalement à la direction de mesure (X) et
déplacement du bloc de fixation (5) transversalement à la direction de mesure (X).

16. Procédé selon revendication 15, caractérisé en ce qu'au cours du déplacement du bloc de fixation (5) transversalement à la direction de mesure (X), un élément de contact (30) prévu sur le bloc de fixation (5) est amené en contact électro-conducteur avec une surface de la règle (2).
